(19) Europäisches Patentamt
European Patent Office
Office européen des brevets

(11) Publication number: **0 420 331 A1**

# (12) EUROPEAN PATENT APPLICATION

(21) Application number: **90202506.3**

(51) Int. Cl.5: **C08G 67/02**, B29D 7/01

(22) Date of filing: **21.09.90**

(30) Priority: **25.09.89 US 411772**
**25.09.89 US 411771**

(43) Date of publication of application:
**03.04.91 Bulletin 91/14**

(84) Designated Contracting States:
**AT BE CH DE ES FR GB IT LI NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Klingensmith, George Bruce**
**1828 Milford Street**
**Houston, Texas 77098(US)**

(74) Representative: **Aalbers, Onno et al**
**P.O. Box 302**
**NL-2501 CH The Hague(NL)**

## (54) Mono- or biaxially drawn films.

(57) Stretched, mono- or biaxially drawn film produced from linear alternating terpolymers of carbon monoxide, ethylene and at least one ethylenically unsaturated hydrocarbon, demonstrates good properties of strength and stiffness, even at low draw ratios.

EP 0 420 331 A1

Xerox Copy Centre

## MONO- OR BIAXIALLY DRAWN FILMS

This invention relates to a mono- or biaxially drawn film produced by drawing a non- or less-stretched polymer sheet along one or two axes, respectively.

Such films are known generally, and commercial equipment is available for producing them from (thermoplastic) polymers, especially polyolefins. The films made from polyolefins, however, are not printable by conventional inks and dyes, which limits their application as a packaging material. Also do their gaseous barrier properties leave room to improvement.

It is an objective of the present invention to provide films which do not suffer from these limitations. It is the principal objective, however, to provide such films which have better properties of stiffness and strength.

It has now been found that these objectives are met by selecting a polymer of carbon monoxide and at least two ethylenically unsaturated hydrocarbons, and drawing a sheet thereof at specific conditions of temperature and drawing ratio.

Accordingly the present invention relates to a process for producing a mono- or biaxially drawn film by drawing a non- or less-stretched polymer sheet along one or two axes, respectively, characterized by drawing a linear alternating terpolymer of carbon monoxide, ethylene and a second ethylenically unsaturated hydrocarbon of at least 3 carbon atoms, the terpolymer having a melting point of at least 214 °C, at a draw temperature between 175 °C and 205 °C, to a draw ratio of at least 4. The invention als concerns a mono- or biaxially drawn film produced by drawing a non- or less-stretched polymer sheet along one or two axes, respectively, characterized by comprising a linear alternating terpolymer of carbon monoxide, ethylene and a second ethylenically unsaturated hydrocarbon of at least 3 carbon atoms, the melting point of the terpolymer being at least 214 °C and the draw ratio of the drawn film to the non-stretched sheet from which it was produced being at least about 4.

Although a variety of polymers of carbon monoxide and at least one ethylenically unsaturated hydrocarbon are suited for drawing into films, the present polymers are linear alternating terpolymers wherein moieties of carbon monoxide alternate with moieties of ethylene and a second ethylenically unsaturated hydrocarbon of at least 3 carbon atoms and the polymer contains substantially one molecule of carbon monoxide for each molecule of ethylenically unsaturated hydrocarbon. The hydrocarbons useful as the second ethylenically unsaturated hydrocarbon are aliphatic such as propylene and other α-olefins, e.g., 1-butene, isobutylene, 1-hexene and 1-decene, or are arylaliphatic such as styrene and ring-alkylated styrenes, e.g., p-methylstyrene, p-ethylstyrene and m-methylstyrene. The preferred terpolymers are terpolymers of carbon monoxide, ethylene and, as the second hydrocarbon, an aliphatic α-olefin, especially propylene. Such polymers are therefore broadly represented by the repeating formula

$$-[-CO-(-C_2H_4-)-]_x-[-CO-(-G-)-]_y- \qquad (I)$$

wherein G is a moiety of the second ethylenically unsaturated hydrocarbon of at least 3 carbon atoms polymerized through the ethylenic unsaturation. The $[CO(C_2H_4)$ units and the $-CO(G)$ units are found randomly throughout the polymer chain and the ration of y:x, generally less than about 0.5, reflects the proportions of ethylene and the second hydrocarbon in the terpolymer. The end groups or "caps" of the polymer chain will depend upon what materials were present during the production of the terpolymer and whether or how the terpolymer was purified. The overall properties of the terpolymer do not appear to depend to any considerable extent on the particular end groups so that the polymer is fairly represented by the above formula for the polymer chain.

The polyketone terpolymers of general interest are those of molecular weight from 1000 to 200,000, particularly those of molecular weight from 20,000 to 90,000. Such terpolymers usually have a melting point of from 175 °C to 270 °C and a limiting viscosity number (LVN), expressed in dl/g as measured in m-cresol at 60 °C, of from 0.8 to 4, preferably from 1.5 to 2.5. For the purpose of producing the drawn films of the invention, however, the chemical composition and physical properties of suitable terpolymers are somewhat narrower in scope and all polyketone terpolymers of carbon monoxide, ethylene and second hydrocarbon are not equally useful in the production of stretched or drawn films according to the invention.

The polyketone terpolymers which are suitable for biaxially stretched film production according to the invention are those linear alternating terpolymers of the above formula I wherein the melting point of the terpolymer is at least 214 °C and preferably is at least 220 °C. These melting points roughly correspond to terpolymers having contents of second hydrocarbon of no more than 5% by mole based on total polymer

and preferably no more than 3% by mole on the same basis. When the preferred second hydrocarbon propylene is employed, the terpolymer will be no more than 6.5% by weight propylene and preferably no more than 5% by weight propylene, on the same basis. The presence of some second hydrocarbon in the terpolymer is required, e.g., at least 0.5% by mole based on total terpolymer, but the presence of second hydrocarbon in excess of about 5.0% by mole results in terpolymers having melting points below 214 °C and biaxially stretched films produced from terpolymers of such a composition exhibit lower strength, stiffness and lower high temperature resistance.

The terpolymers useful in the present invention can be produced by the general processes of the published European Patent Applications Nos. 121965, 181014, 213671 or 257663, with attention to the amount of second hydrocarbon present in the reaction mixture and accordingly in the resulting linear alternating terpolymer. Although the scope of the polymerization process is extensive, the preferred catalyst composition is formed from a palladium alkanoate, particularly palladium acetate, the anion of trifluoroacetic acid or p-toluenesulfonic acid and a bidentate ligand of phosphorus selected from 1,3-bis-(diphenylphosphino)propane and 1,3-bis[di(2-methoxyphenyl)phosphino]propane. The carbon monoxide and the ethylenically unsaturated hydrocarbons are contacted under polymerization conditions in the presence of the catalyst composition and a reaction diluent. Lower alkanols are suitable reaction diluents, especially methanol. Typical reaction conditions include a reaction temperature from 30 °C to 150 °C and a reaction pressure from 10 bar to 100 bar. Subsequent to polymerization the terpolymer product is obtained as a material substantially insoluble in the reaction diluent and is recovered by conventional methods such as filtration or decantation. The terpolymer is used as produced or alternatively is purified as by contact with a solvent or complexing agent which is selective for catalyst residues.

The terpolymer product is converted to a non-stretched sheet prior to stretching or drawing by methods which are conventional for thermoplastics. In one modification, the terpolymer is extruded through a suitable die to produce the non-stretched sheet. In another modification, the terpolymer in particulate form is compression moulded at somewhat elevated temperatures to produce the sheet from which the stretched film is formed. The length and width of the non-stretched sheet are limited only by the size of the equipment available for the stretching process. The thickness of the sheet to be stretched is of some significance, depending upon the desired application and is typically from 0.25 to 1.25 mm thick. By whatever method the non-stretched sheet is produced, some care should be taken to prevent the inclusion within the sheet of foreign material, particularly non-thermoplastic foreign material, since the presence of such material often leads to the formation of holes or voids in the stretched film.

The terpolymers of the invention may be stretched monoaxially, i.e., in one dimension. The monoaxial drawing or stretching takes place at temperatures somewhat below the melting point of the particular terpolymer and the process is commonly referred to as cold drawing. Drawing temperatures are determined by the melting point and molecular weight of the polymer and are from about 20 °C to about 45 °C below the melting point of the polymer, preferably from about 30 °C to about 40 °C below the melting point of the terpolymer being monoaxially drawn.

In another embodiment, the terpolymers of the invention are stretched biaxially, i.e., in two dimensions, and are preferably biaxially stretched or drawn at a 90-degree angle although biaxial stretching at other angles is also satisfactory. Very suitably the drawing angle of the biaxial drawing is between 85 and 95 °. The biaxial drawing or stretching takes place at temperatures determined by the melting point and the molecular weight of the polymer and are somewhat above the melting point of the terpolymer. Drawing temperatures of about 15 °C above the melting point of the polymer are satisfactory with drawing temperatures of about 10 °C above the melting point of the polymer being preferred.

The physical drawing of the polyketone terpolymer is accomplished by methods known in the art employing commercially available equipment. One form of such equipment operates by clamping on the edges of the sheet to be drawn and, at an appropriate temperature, separating the edges of the sheet at a controlled rate. Alternatively, and preferably for commercial purposes, the mono- or biaxial drawing process is conducted continuously at high production rates in equipment comprised of multiple roll drawing stages, which for biaxial drawing are followed in line by a so-called tenter-frame device in which the partially (monoaxially) drawn film is clamped to a chain belt which gradually moves angularly away from the forward (machine) direction to impart a transverse extension of the film at 90 degrees to the forward direction. The multiple roll drawing stages comprise a series of steps between heated rolls rotating at different and increasing rates. The tenter-frame device is enclosed in a large oven for temperature control. The belt-clamp device moves forward at a speed equal to or alternatively faster than the last roll of the roll-draw section so that additional machine direction orientation can also be imparted during the traverse drawing stage. Thus, various combinations of machine direction (MD) and transverse direction (TD) biaxial draw can be achieved. Such equipment is also commercially available. When appropriate combinations of draw

temperatures and draw rates are employed, draw ratios, i.e., the ratio of a dimension of a stretched film to a non-stretched sheet, for monoaxial stretching will suitably be from 4 to 20 with draw ratios of 4 to being more common. For biaxial stretching the ratio will suitably vary from 4x4 to 10x10 with draw ratios from 4x4 to 8x8 being more common. Various unequal combinations of MD and TD such as 4x6 or 6x4 can also be imparted to the film as may be required for a particular contemplated application for the film. A draw ratio of less than about 4 does not produce the desired degree of molecular orientation in the stretched film and the desired enhancement of physical properties is not obtained. Attempts to obtain a draw ratio more than about 20 using known procedures and equipment will frequently lead to ruptures of the film.

The mono- or biaxially stretched or drawn films of the invention have a high degree of molecular orientation and are characterized by high mechanical strength and stiffness, even at relatively low draw ratios. The advantages of the invention are particularly evident when multiple plys of monoaxially drawn film are laminated together in an alternating 90-degree biaxial arrangement. Such laminates have a high degree of clarity and are resistant to puncture by blunt objects, even those striking the film at high velocity. The polyketone films and laminates thereof have enhanced barrier properties towards oxygen and carbon dioxide, compared to, for example, oriented polyolefins, and unlike polyolefin films are printable by conventional inks and dyes. The terpolymer may incorporate conventional additives such as antioxidants, stabilizers, colourants and slip and antiblock agents which do not unduly interfere with the stretching process and do not adversely affect the stretched film.

The stretched films and laminates thereof are processable by conventional forming methods such as thermoforming and pressure forming and are shaped or forged by such methods into autoclavable shaped articles such as cooking bags and pouches or tubs and other containers for food and drink. The films are also suitably employed in packaging applications requiring greater high temperature resistance than that provided by polyolefins or PVC, and are useful as the base layer in a variety of laminates with other polymeric materials such as ethylene/vinyl acetate copolymers where the strength of the stretched polyketone terpolymer layer is sufficient to provide the necessary strength to the laminate.

The invention is further illustrated by the following Examples which should not be regarded as limiting the invention.

## EXAMPLE 1

a) A terpolymer of carbon monoxide, ethylene and 7% by weight based on total polymer of propylene was produced in the presence of a catalyst composition formed from palladium acetate, trifluoroacetic acid and 1,3-bis(diphenylphosphino)propane. The terpolymer had a melting point of 212 °C, an average molecular weight of about 70,000 and an LVN, measured in m-cresol at 100 °C, of 1.5 dl/g. This polymer was designated Polymer A.

Another terpolymer of carbon monoxide, ethylene and 6% by weight based on total terpolymer of propylene was produced in analogous manner, but at different conditions of temperature and pressure. This terpolymer had a melting point of 220 °C, an average molecular weight of about 70,000 and an LVN, measured in m-cresol at 100 °C, of 1.6 dl/g. This polymer was designated Polymer B.

b) A stretched, monoaxially drawn film was produced from an extruded film of Polymer A using a conventional drawing apparatus operating at temperatures about 30 °C below the melting point of the polymer. The conditions of the drawing process and the properties of the resulting stretched film are shown in Table I.

A stretched, monoaxially drawn film was then produced from a compression moulded film of Polymer B using the same drawing apparatus operating at temperatures about 30 °C-40 °C below the melting point of the polymer. The conditions of the drawing operation and the properties of the resulting stretched film are shown in Table I, wherein a comparison is made with properties of a monoaxially stretched film of a commercial polypropylene.

TABLE I

| Sample | B | | A* | Polypropylene* |
|---|---|---|---|---|
| Molecular wt.(est.) | 70,000 | | 70,000 | 450,000 |
| Draw rate, cm/min | 50 | | 50 | 25 |
| Draw temp, °C | 183 | 190 | 180 | 100 |
| Monoaxial Draw ratio | 6.5 | 7.5 | 6.5 | 6.5 |
| Tensile strength at break, MPa | 676 | 434 | 552 | 303 |
| Elongation at break, % | 7 | 5.5 | 39.9 | 21.9 |
| 1% Tangent modulus, MPa | 8270 | 10340 | 2620 | 5170 |

* not according to the invention

EXAMPLE 2

A linear alternating terpolymer of carbon monoxide, ethylene and 6.3% by weight based on total terpolymer of propylene was produced in the presence of a catalyst composition formed from palladium acetate, trifluoroacetic acid and 1,3-bis(diphenylphosphino)propane. The polymer had a melting point of 214°C and an LVN, measured in m-cresol at 60°C, of 1.4 dl/g. This polymer was designated Polymer C. The nascent reactor polymer was melt compounded by injection moulding and then reground to coarse powder. The powder was compression moulded into a 20x20x0.05 cm sheet. The properties of the compression moulded sheet and the stretched film produced therefrom were determined and are shown in Table II. The mechanical stretching was accomplished with the same conventional unit for biaxial stretching of thermoplastic films as used in Example 1 operating in the biaxial drawing mode at a temperature of 230°C. The polymer itself was drawn at such speed through the high temperature zone of the apparatus, that its temperature was still below its melting point of 214°C, when the drawing was completed and the film left the high temperature zone (oven).

TABLE II

| Sample | Compression Moulded | Biaxially Stretched | |
|---|---|---|---|
| Oven temp., °C | - | 230°C | |
| Draw rate, m/min | - | 0.75 | |
| Draw ratios | - | 4.5 | |
| Tensile strength, MPa | 48 | 34 | 32[a)] |
| Tensile strength at break, MPa | 69 | 159 | 138 |
| E-modulus, MPa | 696 | 2140 | |
| 1% Secant modulus, MPa | - | 2160 | 1860 |
| Elongation at break, % | 300 | 37 | 25 |

[a)] samples cut parallel to draw directions

## Claims

1. Process for producing a mono- or biaxially drawn film by drawing a non- or less-stretched polymer sheet along one or two axes, respectively, characterized by drawing a linear alternating terpolymer of carbon

monoxide, ethylene and a second ethylenically unsaturated hydrocarbon of at least 3 carbon atoms, the terpolymer having a melting point of at least 214 °C, at a draw temperature between 175 °C and 205 °C, to a draw ratio of at least 4.

2. A process as claimed in claim 1, characterized in that the second hydrocarbon is propylene.

3. A process as claimed in claim 1 or 2, characterized in that the terpolymer has a melting point of at least 220 °C.

4. A process as claimed in any of claims 1-3, characterized in that the drawing is a monoaxial drawing, and the draw ratio is from 4 to 20.

5. A process as claimed in any of claims 1-3, characterized in that the drawing is a biaxial drawing and both draw ratios are between 4 and 10.

6. A process as claimed in claim 5, characterized in that the drawing angle of the biaxial drawing is between 85 and 95 °.

7. Mono- or biaxially drawn film produced by drawing a non- or less-stretched polymer sheet along one or two axes, respectively, characterized by comprising a linear alternating terpolymer of carbon monoxide, ethylene and a second ethylenically unsaturated hydrocarbon of at least 3 carbon atoms, the melting point of the terpolymer being at least 214 °C and the draw ratio of the drawn film to the non-stretched sheet from which it was produced being at least about 4.

8. A film as claimed in claim 7, characterized in that the second hydrocarbon is propylene.

9. A film as claimed in claim 7 or 8, characterized in that it was produced at a draw temperature between 175 °C and 205 °C.

European Patent Office

# EUROPEAN SEARCH REPORT

Application Number

EP 90 20 2506

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0213671 (SHELL INTERNATIONALE RESEARCH MAATSCHAPPIJ B.V.)<br>* the whole document *<br>--- | 1 | C08G67/02<br>B29D7/01 |
| A | EP-A-0306115 (SHELL INTERNATIONALE RESEARCH MAATSCHAPPIJ B.V.)<br>* the whole document *<br>--- | 1 | |
| A | DE-A-1918562 (ETHYLENE-PLASTIQUE S.A.)<br>* the whole document *<br>----- | 1 | |

TECHNICAL FIELDS SEARCHED (Int. Cl.5 )

C08G
B29D

The present search report has been drawn up for all claims

| Place of search | Date of completion of the search | Examiner |
|---|---|---|
| BERLIN | 26 DECEMBER 1990 | SMITH C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)